Europäisches Patentamt

(19) European Patent Office

Office européen des brevets

(11) **EP 0 635 139 B1**

(12) **EUROPÄISCHE PATENTSCHRIFT**

(45) Veröffentlichungstag und Bekanntmachung des Hinweises auf die Patenterteilung:
**23.06.1999 Patentblatt 1999/25**

(21) Anmeldenummer: **93905201.5**

(22) Anmeldetag: **18.03.1993**

(51) Int Cl.⁶: **G02B 6/30**

(86) Internationale Anmeldenummer:
**PCT/DE93/00248**

(87) Internationale Veröffentlichungsnummer:
**WO 93/21550 (28.10.1993 Gazette 1993/26)**

(54) **VERFAHREN ZUR HERSTELLUNG OPTISCHER POLYMERBAUELEMENTE MIT INTEGRIERTER FASER-CHIP-KOPPLUNG IN ABFORMTECHNIK**

PROCESS FOR PRODUCING OPTICAL POLYMER COMPONENTS WITH INTEGRAL FIBRE/CHIP COUPLING BY MOULDING

PROCEDE POUR LA FABRICATION DE COMPOSANTS OPTIQUES EN POLYMERE AVEC COUPLAGE INTEGRE PUCE/FIBRE PAR MOULAGE

(84) Benannte Vertragsstaaten:
**DE FR GB IT SE**

(30) Priorität: **10.04.1992 DE 4212208**

(43) Veröffentlichungstag der Anmeldung:
**25.01.1995 Patentblatt 1995/04**

(73) Patentinhaber: **ROBERT BOSCH GMBH**
**70442 Stuttgart (DE)**

(72) Erfinder: **MAYER, Klaus-Michael**
**D-7016 Gerlingen (DE)**

(56) Entgegenhaltungen:
**EP-A- 0 324 492          EP-A- 0 331 338**
**EP-A- 0 388 642          US-A- 5 059 763**

- **PATENT ABSTRACTS OF JAPAN vol. 13, no. 329 (P-904)25. Juli 1989 & JP,A,01 094305 (HITACHI)**

**Beschreibung**

Die Erfindung betrifft ein Verfahren nach dem Oberbegriff des Hauptanspruches und findet Anwendung bei der massenweisen Produktion von monomodigen oder multimodigen Bauelementen der Integrierten Optik mit monolithisch integrierter Faser-Chip-Kopplung.

Der zunehmende Einsatz integriert-optischer Komponenten für die optische Nachrichtentechnik, für die Sensorik und den Computerbereich (optischer Datenbus) läßt der optischen Anschlußtechnik (Chip-Faser-Kopplung) eine immer größere Bedeutung zukommen. Bereits kleinere private Vermittlungsstellen mit etwa 1.000 Teilnehmeranschlüssen benötigen dabei beispielsweise mehrere tausend optische Anschlüsse zwischen den einzelnen Subschaltstufen, da Anzahl und Komplexität der auf einzelnen Substraten integrierten optischen Komponenten auf Grund der extremen Aspektverhältnisse in der Optik stark eingeschränkt ist.

In solchen Anwendungsfällen bestimmt die Realisierbarkeit und Zuverlässigkeit (mechanische und thermische Stabilität) der optischen Anschlußtechnik und der erforderliche Anschlußaufwand letztlich den erreichbaren Ausbaugrad eines optischen Vermittlungssystems bzw. eines optischen Nachrichtennetzes.

Der Licht-Einkoppelwirkungsgrad bei der Kopplung von Glasfasern und integrierten Wellenleitern der Bauelemente hängt stark von dem Abstand der Endflächen, und sehr stark von einer lateralen Verschiebung sowie einer Winkelverkippung der optischen Achsen gegeneinander ab. Die Glasfaser besitzt bei der Ankopplung demnach fünf Freiheitsgrade, die unabhängig voneinander optimiert werden müssen: einen axialen Freiheitsgrad, zwei laterale Freiheitsgrade und zwei Winkelfreiheitsgrade. Bei den für Glasfasern typischen Feldverteilungen führt z. B. ein lateraler Versatz von nur wenigen µm bereits zu Koppelverlusten im dB-Bereich. Ein effektives Ankoppelverfahren erfordert eine Reduktion der Freiheitsgrade sowie eine Möglichkeit der gleichzeitigen Positionierung aller Fasern eines Bündels. Aus Appl. Opt. (1978), 895, "Optical coupling from fibres to channel waveguides formed on silicon", J. T. Boyd und S. Sriram und ebenso aus der EP-A 0 331 338, ist es bekannt, V-Nuten als Positioniergräben für die Glasfasern in ein Siliziumsubstrat einzuätzen. Die anisotrop geätzten V-Nuten werden allseitig von langsam ätzenden {111} - Ebenen begrenzt, die einen Winkel von 54,7° zur Wafer-Oberfläche einschließen. Fluchtend mit diesen V-Nuten sind die integrierten Wellenleiter angeordnet, wobei die Breite der Nuten so optimiert werden kann, daß durch die sich ergebende Nutform der Faserkern in der gleichen horizontalen Ebene wie der Lichtwellenleiter zu liegen kommt. Die im Bereich der Kopplungsfläche zum Lichtwellenleiter liegende Stirnfläche der V-Nut ist ebenfalls unter einem Winkel von 54,7° geneigt, so daß die Glasfaser nicht ganz bis zum Wellenleiter herangeschoben werden kann. Als Lösung für dieses Problem wird von Boyd und Sriram vorgeschlagen, die Glasfaser mit einer um ebenfalls 54,7° geneigten Endfläche zu versehen, um damit den Faserkern bis auf Stoßkopplung an den integrierten Lichtwellenleiter heranzuschieben. Dieses Verfahren hat jedoch den Nachteil, daß eine aufwendige Endflächenbearbeitung der Faser notwendig ist und die Faser nur in einer bestimmten Lage in die Nut eingelegt werden darf. Bei der Kopplung besteht darüber hinaus die Gefahr, daß die beiden Endflächen aufeinandergleiten oder zumindest der Endbereich der Faser daher aus der Nut herausgeschoben wird. Eine zusätzliche Schwierigkeit ergibt sich aus der Notwendigkeit, nicht nur die Faser, sondern auch den integrierten Wellenleiter mit einer entsprechend geneigten Endfläche zu versehen.

Dieses Verfahren hat weiterhin den entscheidenden Nachteil, daß eine massenweise Produktion von integrierten optischen Bauelementen nicht möglich ist. Gerade jedoch die massenweise Produktion ist Voraussetzung für eine effiziente und praktikable Anwendung.

Von H. Hosokawa et al., in Integrated Photonics Research Conf., Paper MF6 (1991), ist bekannt, die gleichzeitige Herstellung von Lichtwellenleiterstrukturen und Gitterstrukturen zur Lichteinkopplung durch Prägetechnik und anschließende Photopolymerisation durchzuführen. Diese Prägetechnik für monomodige Lichtwellenleiter ist jedoch nicht in der Lage, eine substratintegrierte Faserführung zu realisieren.

Darüber hinaus ist das Prinzip der galvanischen Abformung und Spritzgußvervielfältigung von Mikrostrukturen durch Lithographie mit Synchrotronstrahlung, das sogenannte LIGA-Verfahren, bekannt. Hier werden die abzuformenden Primärstrukturen üblicherweise durch Röntgenbelichtung von Kunststoffen am Synchrotron erzeugt und davon galvanisch die Formeinsätze für den Spritzguß erstellt. Mit diesem Verfahren ist es nicht möglich, eine exakte Höhenjustage von Faserführungsstrukturen, bei der simultanen Herstellung von Lichtwellenleitern und Faserführungsstrukturen, zu erreichen. Gerade die exakte Justage ist jedoch, wie auch weiter oben beschrieben, die unabdingbare Voraussetzung zur Erzielung hoher Kopplungswirkungsgrade zwischen Faser und Wellenleiter, da bereits geringste vertikale und /oder laterale Abweichungen im Sub-Mikrometerbereich zu einer Beeinträchtigung des Wirkungsgrades führen.

Bei allen bekannten Verfahren ist weiterhin nachteilig, daß eine abschließende Justage der Faser-Chip-Kopplung durch eine gleichzeitig vor mechanischen und anderen äußeren Einflüssen schützende Abdeckelung nicht möglich ist.

Vorteile der Erfindung

Das erfindungsgemäße Verfahren nach den Ansprüchen 1 und 2 bietet demgegenüber den Vorteil, daß eine massenhafte Produktion von Polymerbauelementen mit integrierter und selbstjustierender Ankopplung von Faserführungsstrukturen an Lichtwellenleiter-Bauelementen auf einem gemeinsamen integriert-optischen Chip möglich ist.

Dazu werden hochpräzise vorjustierte Primärstrukturen, die Masterstrukturen, auf Siliciumwafern hergestellt, galvanisch abgeformt und anschließend im Spritzguß-/Spritzprägeverfahren in polymeren Kunststoffen vervielfältigt.

Weitere vorteilhafte Ausgestaltungen sind in den Unteransprüchen angegeben.

In einfacher Weise werden durch bekannte anisotrope Ätztechniken des Siliciums V-förmige Grabenstrukturen in den {100} orientierten Wafer geätzt, wobei sich eine hochpräzise Struktur ergibt, über die die spätere genaue Lage von Faserstruktur und Wellenleiterstruktur zueinander definiert ist.

Eine solche V-Nut ist als Faserführungsstruktur besonders geeignet, da die Winkeljustage, parallel zur Kristalloberfläche, sich automatisch einstellt und über die Öffnungsweite der V-Nut sich die Höhenlage des Faserkerns über die Waferoberfläche exakt einstellen und fertigungstechnisch kontrollieren läßt.

In vorteilhafter Weise werden die V-Nuten mit polymeren Materialien aufgefüllt und die entstandene ebene Oberfläche anschließend mit einem Photolack oder einem anderen strukturierbaren Polymer beschichtet. In die so entstandene Deckschicht werden erfindungsgemäß grabenförmige Öffnungen strukturiert, die die Abmessungen der späteren Lichtwellenleiter definieren.

Weiterhin erfindungsgemäß werden die Gräben anschließend mittels an sich bekannter Excimer-Laserablationstechnik wieder geöffnet und in besonders vorteilhafter Weise senkrechte Faserstrukturanschläge am wellenstrukturseitigen Ende der V-Nuten geschnitten.

Es wurde gefunden, daß in einfacher Art und Weise ein selektiver Abtrag der organischen Polymere möglich ist, ohne daß die Siliciumflächen der Masterstruktur angegriffen werden. Die Laserablationstechnik eignet sich auch in besonderer Weise, den genau definierten senkrechten Faseranschlag freizulegen.

In weiterer vorteilhafter Ausgestaltung der Erfindung ist vorgesehen, daß die Masterstruktur aus Lichtwellenleiter-Vorstruktur und integrierter Faserführungsstruktur durch an sich bekannte Galvanikverfahren abgeformt wird.

Die so entstandene Negativform wird zur Herstellung zahlreicher Tochterkopien der Masterstruktur verwendet. Dies erfolgt vorteilhafterweise durch Spritzguß- oder Spritzprägeverfahren in Polymermaterialien geeigneter optischer Eigenschaften.

In einer weiteren Ausgestaltung der Erfindung ist vorgesehen, daß mit der Masterstruktur für die Faser-Chip-Kopplung gleichzeitig eine Masterstruktur für eine mit dem Grundelement verbundene Deckelplatte hergestellt wird, die ebenfalls entsprechend des oben beschriebenen Verfahrens galvanisch abgeformt wird und zur Herstellung von Tochterstrukturen dient.

Als besonders vorteilhaft hat sich herausgestellt, wenn die Verbindung zwischen den die Faser- und Wellenleiterstruktur tragenden Grundkörper und der Deckelplatte durch eine Knickkante gebildet wird. Die Knickkante wird in einfacher Weise dadurch erreicht, daß entsprechend beabstandet zueinander gleichzeitig mit der anisotropen Einätzung der Faserführungsstrukturen paarweise kleine V-förmige Strukturen entlang der späteren Knickkante eingeätzt werden.

Der Abstand der paarweisen V-Nuten zueinander bestimmt dann gleichzeitig in besonders vorteilhafter Weise den späteren Abstand zwischen Polymergrundplatte und Deckelplatte.

In dem Bereich der späteren Deckelplatte werden gleichzeitig weitere Führungsnuten eingeätzt, die so angeordnet sind, daß nach dem Umklappen der Deckelplatte entlang der Knickkante eine paßgenaue Justage der eingelegten Glasfasern erfolgt.

Besonders vorteilhaft ist, daß nun auf einem einzigen Siliciumwafer die Masterstruktur für das komplette spätere Polymerbauelement, einschließlich Abdeckelung, angelegt ist und eine spätere Justage von Deckel und Substrat durch die Knickkante automatisch und in der notwendigen Präzision erfolgt.

Diese gemeinsame Masterstruktur wird nunmehr in einem Stück galvanisch abgeformt, und die entstandene Negativform wird zur gemeinsamen Herstellung der Tochterstrukturen eingesetzt.

Hierbei wird, um die Knickkante zu erreichen, eine zweite Negativform erstellt, die eine große V-Nut aufweist, die über die bereits beschriebene anisotrope Einätztechnik erstellt wurde, die genau seitenverkehrt zwischen die kleineren paarweisen V-Nuten paßt. Hierdurch erfolgt eine mikromechanische Feinjustierung der beiden Formeinsätze.

Da die Neigungswinkel der jeweiligen Masterstrukturen der beiden Negativformen einander gegenüberliegen, passen die Führungsstrukturen flächig aufeinander.

Grundelement und Deckelplatte können prinzipiell gleichwertig auch separat hergestellt, abgeformt und vervielfältigt werden.

Durch die Wahl- der Brechungsindices von Deckelplatte, polymergefüllter Wellenleiterkanäle und polymerer Grundkörper kann zusammen mit den Abmessungen des Wellenleiterquerschnitts die optische Feldverteilung im Wellenleiter modelliert werden. Durch den direkten Kontakt des lichtführenden Polymers mit der Glasfaser und die einstellbare, nahezu radial symmetrische Feldverteilung der optischen Felder im Lichtwellenleiter sind optimale Koppelwirkungsgrade zwischen Glasfaser und Lichtwellenleiter bei kostengünstiger, selbstjustierender Montagetechnik erreichbar.

Im Sinne der Erfindung ist weiterhin, daß die durch das beschriebene Herstellungsverfahren gewonnenen optischen Polymerbauelemente mit integrierter Faser-Chip-Kopplung auch für aktive Polymerbauelemente eingesetzt werden.

Dazu werden in die für die Lichtwellenleiter vorgesehenen grabenförmigen Öffnungen anstatt eines passiven Polymers ein nichtlinear-optisches-(NLO) Polymer oder beispielsweise auch ein mit Seltenen Erden dotiertes Polymer eingebracht. Die Verbindungsgestaltung zwischen Faserführungsstruktur und Wellenleiterstruktur wird in der schon oben beschriebenen Weise erreicht, so daß auch hier ein senkrechter Anschluß zwischen Glasfaser und Lichtwellenleiter entsteht.

Die Auswahl des eingesetzten NLO-Polymers, eines passiven oder auch eines dotierten Polymers richtet sich nach dem Einsatz des Polymerbauelementes als beispielsweise optooptisches, akustooptisches, magnetooptisches, elektrooptisches bzw. thermooptisches Bauelement oder auch als optischer Verstärker.

Erfindungsgemäß werden für elektrooptische oder thermooptische Bauelemente zwischen dem die Faserführungsstruktur und Wellenleiterstruktur aufweisenden Grundkörper und der Deckelplatte Leiterbahnen und Elektroden tragende Polymerfolien entsprechend des gewünschten Layouts der NLO-Bauelemente oder der thermooptischen Bauelemente eingebracht. Über die Leiterbahnen und Elektroden erfolgt die wunschgemäße Beeinflussung, zum Beispiel die Auslösung einer Schaltfunktion, auf das Polymer.

Die Herstellung von Grundplatte, Deckelplatte und Schaltfolienausschnitten erfolgt in der bereits beschriebenen zusammenhängenden Form.

Beim Einsatz von Schaltfolien werden die Aussparungen in der Deckelplatte entsprechend der Schaltfoliendicke mit geringerer Tiefe modelliert.

Im Falle der Ausführungsform zusammenhängender Grund- und Deckelplatte ist die Dicke der Schaltfolie durch den Abstand der paarweisen V-Nuten längs der Knickkante vorzuhalten.

Zeichnung

Ausführungsbeispiele der Erfindung sind in den Zeichnungen dargestellt und in der nachfolgenden Beschreibung näher erläutert. Es zeigen:

Figur 1    einen Ausschnitt aus einer Masterstruktur auf Siliciumsubstrat in Draufsicht,

Figur 2    die in Figur 1 dargestellte Masterstruktur im Längsschnitt,

Figur 3    die in den Figuren 1 und 2 dargestellte Masterstruktur mit einem Galvanikformeinsatz,

Figur 4    eine Negativform,

Figur 5    eine mit der in Figur 4 dargestellten Negativform gewonnene Tochterstruktur,

Figur 6    ein Beispiel für eine praktische Anwendung in einem optischen Polymerbauelement mit integrierter Faser-Chip-Kopplung, jedoch ohne die zugehörige Deckelplatte,

Figur 7    ein optisches Polymerelement mit gleichzeitig vorgesehener Abdeckelung und

Figur 8    ein Beispiel für eine praktische Anwendung eines aktiven optischen Polymerbauelements

Beschreibung der Ausführungsbeispiele

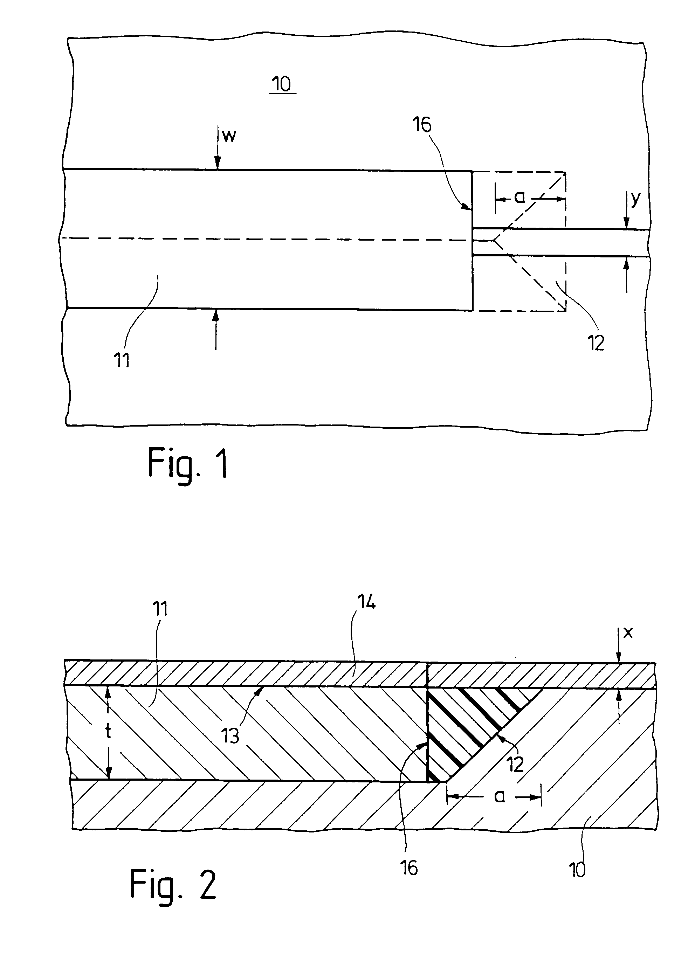

Die in den Figuren 1 und 2 dargestellte Masterstruktur zeigt einen Ausschnitt (Faserführung/Wellenleiterkoppelstelle) eines späteren Bauelements. Die Masterstruktur besteht aus einem Siliciumsubstrat 10, in das zur Aufnahme einer hier nicht dargestellten Glasfaser ein Positioniergraben 11 mit V-förmigem Querschnitt anisotrop eingeätzt wird. Die bekannte anisotrope Ätztechnik weist einen sehr hohen Entwicklungsstand auf und wird auch beim eingangs angegebenen Stand der Technik eingesetzt. Mit Hilfe der Weite w einer rechteckförmigen Öffnung in der Ätzmaske wird die Tiefe t des Positioniergrabens 11 eingestellt. Mit Hilfe von alkalischen Ätzmedien, wie zum Beispiel Kaliumhydroxid, entstehen V-förmge Vertiefungen, die einen sehr präzisen Winkel von 54,7° zur Oberfläche einschließen. Ein solcher Winkel bildet sich auch an einer schrägen Endfläche 12 des Positioniergrabens 11 aus, die sich über eine Länge a in den Positioniergraben 11 hinein erstreckt. Die sich ausbildenden geneigten {111}-Seitenflächen bilden dabei einen durch die anisotropen Ätzeigenschaften des Kristalls definierten, natürlichen Ätzstop.

Für die spätere Höhenlage des Faserkerns gilt folgende Beziehung

$$\delta = \frac{R}{\cos\alpha} - \frac{w}{2}\tan\alpha,$$

wobei R der Fasermantelradius, $\alpha$ oder Neigungswinkel der {111} Flächen gegen die Waferoberfläche und w die Weite des Positioniergrabens 11 an der Wafer-oberfläche ist.

Aus einer Änderung von w= 1 μm resultiert eine Änderung der Höhenlage $\Delta\delta$ 0,7 μm.

Nach dem Ätzen des Positioniergrabens 11 wird dieser mit polymeren Materialien aufgefüllt, so daß sich eine ebene Oberfläche 13 ergibt. Die Oberfläche 13 wird im Anschluß mit einer Schicht 14 aus Photolack oder einem anderen strukturierbaren Polymer versehen.

In die Schicht 14 wird eine grabenförmige Öffnung 15 mit den Abmessungen x und y strukturiert, deren Querschnitt nicht notwendigerweise rechteckig sein muß. Als Strukturierungsverfahren für die Deckschicht 14 eignen sich beispielsweise Belichtungsverfahren (Photolithographie), Laserablation oder Trockenätzverfahren, wie sie für die Mikrostrukturierung entwickelt wurden.

Durch die Abmessungen x und y ist die Größe des späteren in dieser grabenförmigen Öffnung 15 vorgesehenen Lichtwellenleiters definiert.

Mittels einer Excimer-Laserablationstechnik werden der Positioniergraben 11 im Anschluß an die grabenförmige Öffnung 15 nunmehr derart geöffnet, daß dabei eine senkrechte Fläche 16 entsteht. Die senkrechte Fläche 16 dient als Anschlag für die später einzulegende, hier nicht dargestellte, Glasfaser. Die durch die Lasertechnik entstehende glatte Fläche 16 macht eine weitere Bearbeitung der einzulegenden Glasfaser unnötig. Der Schnitt erfolgt in einem Abstand b von der oberen Endkante des Positioniergrabens 11, wobei dieser Abstand b die Ausdehnung a der schrägen Endfläche 12 übertrifft und somit eine spätere Stoßkopplung zwischen Glasfaser und Lichtwellenleiter ermöglicht.

Die spätere relative vertikale Lage der optischen Achsen der Glasfaser und des Lichtwellenleiters wird so insgesamt nur über die Tiefe des Positioniergrabens 12, entsprechend der bereits weiter oben aufgeführten Beziehung, eingestellt.

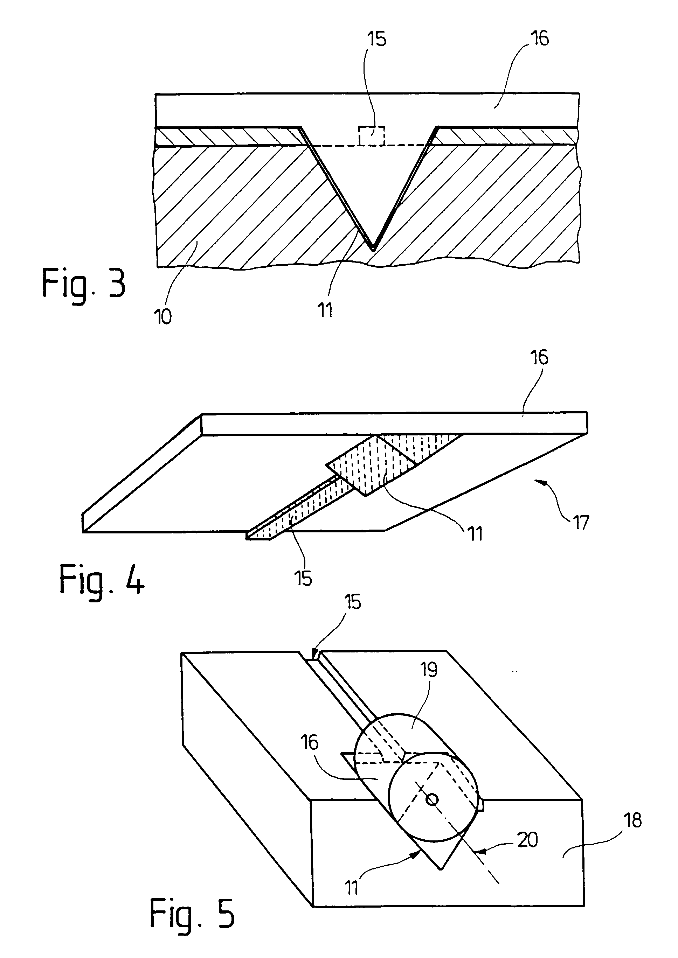

In Figur 3 ist gezeigt, wie die entstandene Masterstruktur galvanisch abgeformt wird.

Dazu wird die Masterstruktur leitfähig metallisiert und mittels bereits bekannter Galvanikverfahren, zum Beispiel auf Nickelbasis, eine Negativform 16 erstellt, die die identischen Abmessungen des Positioniergrabens 11 und der grabenähnlichen Öffnung 15 aufweist. In Figur 4 ist eine entformte Negativform gezeigt. Man erkennt deutlich die prismenförmige Abbildung des Positioniergrabens 11 und die später den Lichtwellenleiter aufnehmende Abbildung der Öffnung 15.

Mit Hilfe des sich aus der Negativform 17 ergebenen Stempels werden zahlreiche Tochterkopien im Spritzguß- oder Spritzprägeverfahren im Polymermaterial, zum Beispiel Polymethylmethacrylat (PMMA), hergestellt. Die Tochterkopien weisen exakt die gleiche Formgebung wie die Masterstruktur auf.

In Figur 5 ist eine Tochterstruktur 18 mit eingelegter Glasfaser 19 schematisch in einer perspektivischen Ansicht gezeigt. Das eingelegte Glasfaserende schließt mit seinem einen Ende plan mit der senkrechten Fläche 16 der Tochterkopie 18 ab. Die optische Achse 20 der Glasfaser 19 kommt durch den V-förmigen Positionierungsgraben 11 in Höhe der den später den Lichtwellenleiter aufnehmenden grabenähnlichen Öffnung 15 zu liegen.

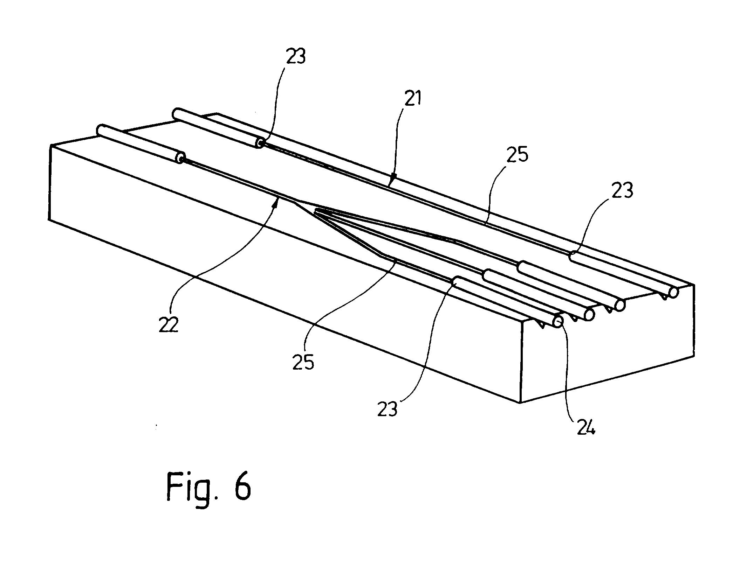

Ein weiteres Ausführungsbeispiel ist in Figur 6 dargestellt. Die in den Figuren 1 bis 5 erläuterte Verfahrensweise bezog sich zur besseren Erläuterung auf eine einzige integrierte Kopplung der Glasfaser mit einem Lichtwellenleiter.

In der Praxis wird es jedoch im Regelfall zu einer großen Anzahl gleichzeitig anzuschließender Glasfasern kommen. Figur 6 zeigt die Anwendung am Beispiel einer einfachen Verbindung 21 und einer gleichzeitigen Verzweigung 22 auf dem selben Bauelement. Die Koppelbereiche 23 zwischen den Glasfasern 24 und den Lichtwellenleitern 25 weisen den in den Figuren 1 bis 5 beschriebenen Aufbau auf.

Die Deckelplatte, welche die Wellenleiter nach oben abschließt und welche in geeigneten Aussparungen die Glasfasern nach oben hin führt, ist in Figur 6 aus Darstellungsgründen nicht gezeichnet.

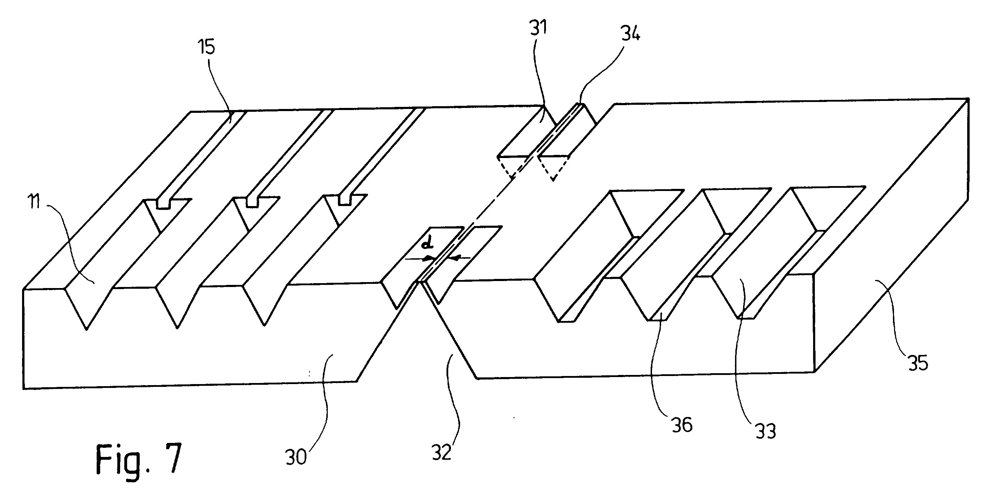

In Figur 7 ist ein aus Grundplatte und Deckelplatte bestehendes optisches Polymerbauelement 30 mit integrierter Faser-Chip-Kopplung im noch aufgeklappten Zustand gezeigt. Zur besseren Veranschaulichung sind die eingelegten Glasfasern und das in die Wellenleitergräben einzufüllende lichtführende Polymer nicht dargestellt.

Deutlich sind die Positioniergräben 11 mit V-förmigem Querschnitt zu erkennen, an die sich die grabenförmigen Öffnungen 15 für die Lichtwellenleiter anschließen. Das Bauelement weist weiterhin paarweise angeordnete V-förmige Nuten 31 auf, die zueinander mit dem Abstand d beabstandet sind. In dem sich ergebenden Zwischenraum der Nuten 31 greift von entgegengesetzter Seite eine weitere V-förmige Nut 32 ein. Die V-Nuten 31 und 32 besitzen herstellungsbedingt die gleichen Neigungswinkel ihrer Seitenflächen.

Das Polymerbauelement besitzt weitere Nuten 33, deren gedachte Mittellinien den gleichen Abstand von der Knickkante 34 haben wie die gedachten Mittellinien der Nuten 11.

Die Funktionsweise des optischen Polymerbauelements ist folgende:

In die Positionierungsgräben 11 werden die Glasfaserenden eingelegt und die grabenförmigen Öffnungen 15 mit lichtführendem Präpolymer gefüllt, dessen Brechungsindex gerinfügig über dem der Grund- und Deckelplatte liegt. Im Anschluß wird die Deckelplatte 35 entlang der Knickkante 34 umgeklappt und wird auf die die Glasfasern und Lichtwellenleiter aufnehmende Seite geschwenkt. Die Nuten 33 drücken im fertig montierten Zustand die Glasfasern paßgenau in die Positioniergräben 11.

Die mechanische Verbindung zwischen Deckelplatte und Strukturseite erfolgt durch dasselbe thermisch oder optisch vernetzbare Präppolymer, das vor dem Zusammenfügen in die Lichtleitergräben eingefüllt wird. Überstehendes Flüssigpolymer wird bei der Montage flachgedrückt und sorgt als dünner Film nach der Vernetzung für eine flächige Verbindung. Der sich ergebende Abstand zwischen Deckelseite und Strukturseite wird durch die Weite des Abstandes d der Nuten 31 eingestellt.

Die Masterstruktur für die polymere Deckelplatte 35 wird ebenfalls durch anisotropes Ätzen von Siliciumwafern hergestellt. Die Deckelplatte kann dabei unabhängig von der Grundplatte oder - wie in Figur 7 dargestellt - mit dieser gemeinsam auf einem Siliciumsubstrat hergestellt werden. Die Weite der Maskenöffnung ist hierbei so groß zu wählen, daß der Faserkern nicht durch die {111}-Flächen geführt wird. Durch Kontrolle der Ätzzeit wird die Ätzung dann abgebrochen, wenn eine breite Nut 33 mit einem Ätzgrund 36 entstanden ist, deren Tiefe gerade den Wert Fasermantelradius minus Höhenlage des Faserkerns erreicht.

Die Herstellung des Faserendanschlages der Nuten 33 erfolgt ebenfalls durch das bereits weiter oben beschriebene Auffüllen der geätzten Nut mit polymeren Materialien und anschließendem Laserschneiden.

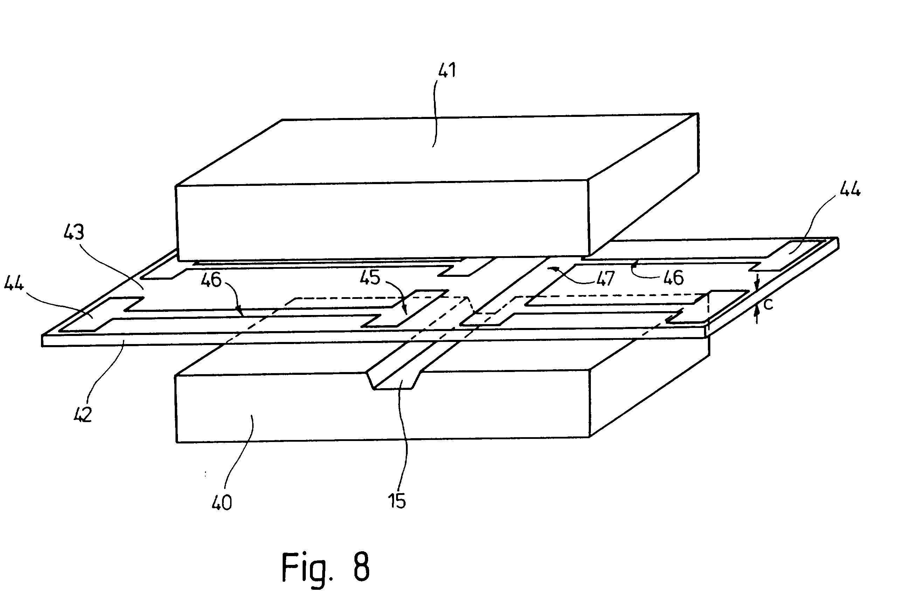

In Figur 8 ist ein aktives optisches Polymerbauelement gezeigt. Zur besseren Verdeutlichung ist nur der Bereich der Wellenleiterstruktur dargestellt. Die nicht dargestellte integrierte Faser-Chip-Kopplung an den Ein- und Ausgängen des Bauelements ist die gleiche, wie sie bereits in den Figuren 1 bis 7 beschrieben wurde.

Das Bauelement besitzt eine polymere Grundplatte 40 mit einer grabenförmigen Öffnung 15 für den Lichtwellenleiter und eine Deckelplatte 41. Zwischen der Grundplatte 40 und der Deckelplatte 41 ist eine optische Pufferfolie 42 angeordnet, die auf ihrer deckelseitigen Fläche 43 mit Anschlußfahnen 44 und Elektroden 45 versehene elektrische Leiterbahnen 46 aufweist. Die Elektroden 45 dienen zur Steuerung der Schaltfunktion und sind in unmittelbarer Nähe des Lichtwellenleiters erforderlich. Die Elektrodenanordnung muß eine weitgehende Durchsetzung des NLO-Polymers durch die elektrischen Felder zwischen ihnen gewährleisten. Andererseits müssen die metallischen Leiterbahnen optisch von den Lichtwellenleitern genügend isoliert sein, um eine starke Lichtdämpfung zu vermeiden. Die elektrischen Leiterbahnen 46 und Elektroden 45 werden entsprechend des Layouts des NLO-Bauelementes planar auf die Polymerfolie 42 aufgebracht. Diese Folie wirkt über ihre Dicke e als optische Pufferschicht, da der Brechungsindex der Pufferfolie 42 kleiner ist als der des Lichtwellenleiters jedoch größer oder gleich dem Brechungsindex der Grundplatte 40 und der Deckelplatte 41 ist. Da die Dicke e, abhängig vom Layout der Wellenleiter, der gewünschten Lichtwellenlänge und der Brechungsindexverhältnisse, nur wenige μm beträgt, wird die Pufferfolie zunächst durch eine Trägerfolie stabilisiert. Die Pufferfolie 42 wird mit der fertig strukturierten Elektrode 45 auf die Deckelplatte 41 auflaminiert und die Trägerfolie abgezogen. Die Glasfaseraussparungen in der Deckelplatte werden frei gehalten oder durch die Folie zunächst überdeckt und anschließend ausgeschnitten, beispielsweise durch eine Laserbearbeitung. Die Tiefe der Aussparung in der Deckelplatte 41 ist um die Dicke e der Pufferfolie vermindert.

Die Montage von polymerer Grundplatte 40, Glasfaser, polymerer Deckelplatte 41, mit auflaminierter Pufferfolie 42 und Elektroden 45, und lichtführendem NLO-Polymer erfolgt wie bereits oben mehrfach beschrieben. Das NLO-Polymer muß, um elektrooptisch aktiv zu sein, ein sogenanntes nicht-zentrosymmetrisches $\chi(2)$-Polymer sein. Dieses muß in einem elektrischen Feld gepolt werden, um eine molekulare Vorzugsrichtung einzustellen, welche für den linearen elektrooptischen Effekt notwendig ist.

Bei dem beschriebenen aktiven optoelektrischen Bauelement wird das $\chi(2)$-Polymer vor dem Vernetzen, also noch im flüssigen Zustand direkt nach dem Einfüllen, durch angelegte elektrische Felder über die Elektroden 45 auf der Pufferfolie 42 gepolt und dann im gepolten Zustand erst vernetzt. Wegen der hohen Molekülbeweglichkeit im flüssigen Zustand können so schon bei kleinen Feldstärken sehr hohe Polungseffizienzen erreicht und nach dem Vernetzen dauerhaft stabilisiert werden.

Die Pufferfolie 42 kann zum elektrischen Anschluß entweder seitlich aus dem Polymerbauelement hinausragen und so eine einfache Folienstecker-Kontaktierung ermöglichen oder auch über eine überstehende Grundplatte 40 gestützt werden, um einfaches Bonden zu ermöglichen.

In Figur 8 ist weiterhin am Beispiel der rechten Elektrode 47 der Einsatz als thermooptisches Bauelement gezeigt. Die Elektrode 47 ist als Heizfilm ausgebildet und wird über dem Lichtwellenleiter angeordnet. Durch eine lokale Temperaturerhöhung wird der Brechungsindex im darunterliegenden Wellenleiterabschnitt abgesenkt. Typische Indexänderungen der optischen Polymere betragen $10^{-4}/\,°C$. Damit lassen sich thermooptische Schaltelemente in integrierter Polymertechnologie auch mit passiven lichtleitenden Polymeren, beispielsweise mit optischen Klebern geeigneten Brechungsindexes, realisieren. Wegen der starken thermooptischen Effekte der Polymeren genügen Temperaturänderungen von wenigen °C in einem der Interferometerarme eines beispielsweise als Mach-Zehnder Interferometer ausgebildeten 2 x 2 Schalters, um diesen vom cross- in den bar-Zustand umzuschalten.

Als weiteres Beispiel ist der Einsatz von aktiven Polymerbauelementen mit integrierter Faserführung als planar integrierter optischer Verstärker denkbar. Dazu können die Effekte der parametrischen Verstärkung, in $\chi(3)$-Polymeren, oder eine optisch gepumpte, stimulierte Emission, durch ein Einfüllen von mit Seltenen Erden, zum Beispiel $Er^{3+}$, -dotierten lichtführenden Polymeren und Einkoppeln eines angepaßten Pumplasers über integrierte Koppler auf dem Chip genutzt werden.

Es wird deutlich, daß das Verfahren zur Herstellung optischer, sowohl passiver als auch aktiver, Polymerbauelemente mit integrierter Faser-Chip-Kopplung in Abformtechnik nicht auf einen Einzelanschluß beschränkt bleibt.

Es können für ein Polymerbauelement durch entsprechenden Aufbau von Ätzmaske zur für Faserführungsstrukturen und Strukturierungsmaske für Wellenleitergräben zur Herstellung der Masterstruktur beliebige Negativformen und damit Tochterkopien in der beschriebenen Weise und in großen Stückzahlen gewonnen werden.

Insbesondere eignet sich das beschriebene Herstellungsverfahren sowohl für monomodige Bauelemente der optischen Nachrichtentechnik und optischen Sensorik wie auch für multimodige Bauelemente etwa in lokalen optischen Netzen.

Anstelle der Glasfasern können in gleichem Sinne Kunststoff-Lichtwellenleiterfasern eingesetzt werden.

Anstelle von Siliciumsubstraten können in gleichem Sinne auch andere anisotrop ätzende Substratmaterialien, beispielsweise Indiumphosphid, verwendet werden.

**Patentansprüche**

1. Verfahren zur Herstellung einer Grundplatte für ein optisches Polymerbauelement mit integrierter Faser-Chip-Kopplung in Abformtechnik, wobei die Grundplatte eine grabenförmige Öffnung zur Aufnahme eines Lichtwellenleiters sowie einen V-förmigen Positioniergraben zur Aufnahme einer an den Lichtwellenleiter anzukoppelnden Lichtleitfaser aufweist, mit folgenden Verfahrensschritten:

- Herstellen einer Masterstruktur auf einem Siliziumsubstrat durch

  - anisotropes Einätzen einer Grabenstruktur, die einen Bereich mit V-förmigem Querschnitt aufweist,
  - Auffüllen der anisotrop eingeätzten Grabenstruktur mit einem polymeren Material, so daß sich eine ebene Oberfläche (13) ergibt,
  - Aufbringen einer Beschichtung aus einem Fotolack (14) oder einem anderen strukturierbaren Polymer auf der ebenen Oberfläche(13),
  - Ausbilden einer grabenförmigen Öffnung (15) in der Beschichtung (14), wobei eine Stirnseite der grabenförmigen Öffnung (15) über dem Bereich mit V-förmigem Querschnitt der eingeätzten Grabenstruktur liegt und wobei die Längsachsen der Grabenstruktur und der grabenförmigen Öffnung (15) in etwa parallel sind,
  - Entfernen der Beschichtung (14) und des polymeren Materials aus dem Bereich mit V-förmigem Querschnitt der Grabenstruktur, vorzugsweise durch Laserablation, so daß ein V-förmiger Positioniergraben (11) mit einer senkrechten Stirnfläche (16) entsteht, der mit der grabenförmigen Öffnung eine zusammenhängende Struktur bildet,

- Herstellen einer Negativform (17) durch galvanisches Abformen der Masterstruktur,
  - Herstellen von die Grundplatte bildenden Tochterstrukturen (18, 35, 40) von der Negativform (17) in einem polymeren Kunststoff.

2. Verfahren zur Herstellung einer Grundplatte für ein optisches Polymerbauelement mit integrierter Faser-Chip-Kopplung in Abformtechnik, wobei die Grundplatte eine grabenförmige Öffnung zur Aufnahme eines Lichtwellenleiters sowie einen V-förmigen Positioniergraben zur Aufnahme einer an den Lichtwellenleiter anzukoppelnden Lichtleitfaser aufweist, mit folgenden Verfahrensschritten:

- Herstellen einer Masterstruktur auf einem Siliziumsubstrat durch

  - anisotropes Einätzen einer Grabenstruktur, die einen Bereich mit V-förmigem Querschnitt aufweist,
  - Auffüllen der anisotrop eingeätzten Grabenstruktur mit einem polymeren Material, so daß sich eine ebene Oberfläche (13) ergibt,
  - Ausbilden einer grabenförmigen Öffnung (15) in dem Siliziumsubstrat und dem polymeren Material, wobei eine Stirnseite der grabenförmigen Öffnung (15) über dem Bereich mit V-förmigem Querschnitt der eingeätzten Grabenstruktur liegt und wobei die Längsachsen der Grabenstruktur und der grabenförmigen Öffnung (15) in etwa parallel sind,
  - Entfernen des polymeren Materials aus dem Bereich mit V-förmigem Querschnitt der Grabenstruktur, vorzugsweise durch Laserablation, so daß ein V-förmiger Positioniergraben (11) mit einer senkrechten Stirnfläche (16) entsteht, der mit der grabenförmigen Öffnung eine zusammenhängende Struktur bildet,

- Herstellen einer Negativform (17) durch galvanisches Abformen der Masterstruktur,
- Herstellen von die Grundplatte bildenden Tochterstrukturen (18, 35, 40) von der Negativform (17) in einem polymeren Kunststoff.

3. Verfahren nach einem der vorhergehenden Ansprüche, dadurch gekennzeichnet, daß die Tochterstrukturen (18, 35, 40) im Spritzguß- und/oder Spritzprägeverfahren, Spritzpressverfahren, Gießverfahren, Vakuumgießverfahren hergestellt werden.

4. Verfahren nach einem der vorhergehenden Ansprüche, dadurch gekennzeichnet, daß für eine Vielzahl von auf einem optischen Polymerbauelement vorgesehenen Faser-Chip-Kopplungen gleichzeitig die Masterstruktur und davon die identischen Tochterstrukturen hergestellt werden.

5. Verfahren nach einem der Ansprüche 1 bis 7, dadurch gekennzeichnet, daß mit der Masterstruktur für die Faser-Chip-Ankopplung gleichzeitig eine Masterstruktur für eine mit dem Grundelement verbundene Deckelplatte erstellt wird.

6. Verfahren nach einem der vorhergehenden Ansprüche, dadurch gekennzeichnet, daß beabstandet zueinander paarweise parallele V-förmige Strukturen (11) eingeätzt werden, deren paralleler Abstand der inneren Abschlußkante den Abstand zwischen der Grundplatte und der Deckelplatte bestimmt.

7. Verfahren nach einem der vorhergehenden Ansrpüche, dadurch gekennzeichnet, daß in die Deckelplatte Führungsnuten (33) eingeätzt werden, die so angeordnet sind, daß sie abzudeckelnde Glasfasern paßgenau aufnehmen und justieren.

8. Verfahren nach einem der vorhergehenden Ansprüche, dadurch gekennzeichnet, daß bei der Abformung der Polymerbauelemente eine zweite Negativform eingesetzt wrid, die eine V-förmige Struktur ausfweist, die seitenverkehrt zwischen die paarweise parallel angelegten V-förmigen Strukturen eingreift und eine mikromechanische Feinjustierung der beiden Negativformen bewirkt.

9. Verfahren nach einem der vorhergehenden Ansprüche, dadurch gekennzeichnet, daß in die abgeformten Polymerbauelemente Glasfaserenden (24) in die Positioniergräben eingelegt werden, die grabenförmigen Öffnungen mit lichtführendem Polymer gefüllt werden und die Deckelplatte umgeklappt und auf die Grundplatte geschwenkt wird.

10. Verfahren nach Anspruch 9, dadurch gekennzeichnet, daß daß die Verbindung zwischen Grundplatte und Deckelplatte durch überstehendes thermisch oder optisch vernetzbares Präpolymer erfolgt.

11. Verfahren nach einem der vorhergehenden Ansprüche, dadurch gekennzeichnet, daß die Grundplatte und die Deckelplatte einzeln hergestellt und während der Montage justiert werden.

12. Verfahren nach einem der vorhergehenden Ansprüche 9 bis 11, dadurch gekennzeichnet, daß in die grabenförmigen Öffnungen ein nicht-linear-optisches Polymer eingefüllt wird und zwischen Grundplatte (40) und Deckelplatte (41) eine Leiterbahnen (46) und Elektroden (45) tragende Polymerfolie (42) eingelegt wird.

13. Verfahren nach Anspruch 12, dadurch gekennzeichnet, daß die Polymerfolie auf die Deckelplatte vor der Montage mit der Grundplatte auflaminiert wird.

14. Verfahren nach Anspruch 12 oder 13, dadurch gekennzeichnet, daß die eingefüllten Polymere elektrooptische, akustooptische, magnetooptische oder thermooptische Effekte oder auch optische Fluoreszenz und stimulierte Emission (optische Verstärkung) zeigen.

15. Verfahren nach einem der Ansprüche 12 bis 14, dadurch gekennzeichnet, daß ein eingefülltes elektrooptisches Polymer noch im flüssigen Zustand direkt nach dem Einfüllen und der Montage der Deckelplatte über ein angelegtes elektrisches Feld durch die auf der Polymerfolie aufgebrachten Elektroden gepolt wird und dann im gepolten Zustand erst endvernetzt wird.

16. Verfahren nach einem der vorhergehenden Ansprüche, dadurch gekennzeichnet, daß in einem optischen Polymerbauelement passsive und aktive optische Polymere kombiniert eingesetzt werden.

17. Optisches Bauelement für integrierte Faser-Chip-Kopplung, mit einer Grundplatte (18, 35, 40), welche einen V-förmigen Positioniergraben (11) mit einer senkrechten Stirnfläche, worin eine Lichtleitfaser (18) einlegbar ist, aufweist, dadurch gekennzeichnet, daß weiterhin eine grabenförmige Öffnung (15), in der ein Lichtwellenleiter (25) ausgebildet ist, vorgesehen ist,
wobei der Positioniergraben (11) und der Lichtwellenleiter (25) eine zusammenhängende Struktur bilden, daß die Grundplatte aus einem Polymermaterial besteht, und daß die Grundplatte durch zweimaliges Abformen einer Masterstruktur aus einkristallinem Halbleitermaterial erzeugt ist, wobei der erste Abformschritt galvanisch und der zweite Abformschritt präge- oder spritzgußtechnisch realisiert ist.

**Claims**

1. Method for producing a baseplate for an optical polymer component having integrated fibre-chip coupling by means of casting technology, the baseplate having a trench-shaped opening for accommodating an optical waveguide, as well as a V-shaped positioning trench for accommodating an optical fibre to be coupled to the optical waveguide, having the following method steps:

- producing a master structure on a silicon substrate by

- anisotropically etching a trench structure which has a region with a V-shaped cross-section,
- filling the anisotropically etched trench structure with a polymer material so as to produce a planar surface (13),
- applying a coating made from a photoresist (14) or another structurable polymer to the planar surface (13),
- constructing a trench-shaped opening (15) in the coating (14), an end face of the trench-shaped opening (15) being situated over the region with the V-shaped cross-section of the etched trench structure, and the longitudinal axes of the trench structure and of the trench-shaped opening (15) being approximately parallel,
- removing the coating (14) and the polymer material from the region with the V-shaped cross-section of the trench structure, preferably by laser ablation, so as to produce a V-shaped positioning trench (11) which has a perpendicular end face (16) and forms a coherent structure with the trench-shaped opening,

- producing a negative mould (17) by casting the master structure using electroplating,
- producing daughter structures (18, 35, 40), forming the baseplate, of the negative mould (17) in a polymer plastic.

2. Method for producing a baseplate for an optical polymer component having integrated fibre-chip coupling by means of casting technology, the base plate having a trench-shaped opening for accommodating an optical waveguide, as well as a V-shaped positioning trench for accommodating an optical fibre to be coupled to the optical waveguide, having the following method steps:

- producing a master structure on a silicon substrate by

  - anisotropically etching a trench structure which has a region with a V-shaped cross-section,
  - filling the anisotropically etched trench structure with a polymer material so as to produce a planar surface (13),
  - constructing a trench-shaped opening (15) in the silicon substrate and the polymer material, an end face of the trench-shaped opening (15) being situated over the region with the V-shaped cross-section of the etched trench structure, and the longitudinal axes of the trench structure and of the trench-shaped opening (15) being approximately parallel,
  - removing the polymer material from the region with the V-shaped cross-section of the trench structure, preferably by laser ablation, so as to produce a V-shaped positioning trench (11) which has a perpendicular end face (16) and forms a coherent structure with the trench-shaped opening,

- producing a negative mould (17) by casting the master structure using electroplating,
- producing daughter structures (18, 35, 40), forming the baseplate, of the negative mould (17) in a polymer plastic.

3. Method according to one of the preceding claims, characterized in that the daughter structures (18, 35, 40) are produced by means of injection-moulding and/or injection-compression moulding, transfer moulding, casting and vacuum casting methods.

4. Method according to one of the preceding claims, characterized in that the master structure and the identical daughter structures thereof are simultaneously produced for a multiplicity of fibre-chip couplings provided on an optical polymer component.

5. Method according to one of Claims 1 to 4, characterized in that a master structure for a cover plate connected to the fundamental element is prepared simultaneously with the master structure for the fibre-chip coupling.

6. Method according to one of the preceding claims, characterized by the etching of mutually spaced paired parallel V-shaped structures (11) whose parallel spacing of the inner terminal edge determines the spacing between the baseplate and the cover plate.

7. Method according to one of the preceding claims, characterized in that guide grooves (33) are etched into the cover plate which are arranged in such a way that they accommodate and adjust glass fibres to be covered in a manner true to size.

8. Method according to one of the preceding claims, characterized in that a second negative mould is used in casting the polymer components which has a V-shaped structure which engages in a laterally inverted fashion between the paired V-shaped structures, which are laid parallel, and effects fine micromechanical adjustment of the two negative moulds.

9. Method according to one of the preceding claims, characterized in that glass fibre ends (24) are inserted into the positioning trenches in the cast polymer components, the trench-shaped openings are filled with a light-conducting polymer, and the cover plate is folded down and the baseplate is pivoted.

10. Method according to Claim 9, characterized in that the connection between the baseplate and cover plate is made by a projecting prepolymer which can be crosslinked thermally or optically.

11. Method according to one of the preceding claims, characterized in that the baseplate and the cover plate are produced individually and adjusted during assembly.

12. Method according to one of the preceding Claims 9 to 11, characterized in that the trench-shaped openings are filled with a nonlinear optical polymer and a polymer film (42) supporting printed conductors (46) and electrodes (45) is inserted between the baseplate (40) and cover plate (41).

13. Method according to Claim 12, characterized in that the polymer film is laminated onto the cover plate before assembly with the baseplate.

14. Method according to Claim 12 or 13, characterized in that the filling polymers exhibit electrooptic, acoustooptic, magnetooptic or thermooptic effects or else optical fluorescence and stimulated emission (optical amplification).

15. Method according to one of Claims 12 to 14, characterized in that a filling electrooptic polymer is polarised while still in the liquid state directly after filling and assembly of the cover plate via an applied electric field by means of the electrodes mounted on the polymer film and is only then finally crosslinked in the polarised state.

16. Method according to one of the preceding claims, characterized in that passive and active optical polymers are used in a combined fashion in an optical polymer component.

17. Optical component for integrated fibre-chip coupling, having a baseplate (18, 35, 40) which has a V-shaped positioning trench (11) with a perpendicular end face, in which an optical fibre (18) can be inserted, characterized in that there is further provided a trench-shaped opening (15) in which an optical waveguide (25) is constructed, the positioning trench (11) and the optical waveguide (25) forming a coherent structure, in that the baseplate consists of a polymer material, and in that the baseplate is produced by twice casting a master structure from a monocrystalline semiconductor material, the first casting step being implemented by electroplating, and the second casting step being implemented by compression moulding or injection moulding technology.

**Revendications**

1. Procédé de fabrication d'une plaque de base pour un composant optique en polymère avec couplage fibre/puce intégré selon la technique du moulage, la plaque de base ayant une ouverture en forme de sillon pour recevoir un guide d'ondes optique et ainsi qu'un sillon de positionnement à section en V pour recevoir une fibre guide de lumière à coupler sur le guide d'ondes optique, et selon les étapes de procédé suivants :

- fabrication d'une structure maître sur un substrat de silicium par

  - gravure anisotrope d'une structure de sillon ayant une zone avec une section en forme de V et
  - remplissage de la structure de sillon à gravure anisotrope avec un polymère pour donner une surface supérieure plane (13),
  - mise en place d'un revêtement de photolac (14) ou autre polymère susceptible d'être structuré sur la surface supérieure (13),
  - réalisation d'une ouverture en forme de sillon (15) dans le revêtement (14), la face frontale de l'ouverture (15) en forme de sillon se situant au-dessus de la zone à section en forme de V de la structure en sillon gravée et l'axe longitudinal de la structure du sillon et de l'ouverture (15) en forme de sillon étant sensiblement parallèle et
  - enlèvement du revêtement (14) et du polymère de la zone de la section en forme de V de la structure en sillon, de préférence par ablation par laser pour former un sillon de positionnement (11) à section en V ayant une surface frontale (16) perpendiculaire, et qui constitue avec l'ouverture en forme de sillon une structure communiquante,

- fabrication d'un négatif (17) par moulage galvanique de la structure maître,
- fabrication de structures filles (18, 35, 40) formant la plaque de base à partir du négatif (17) en un polymère plastique.

2. Procédé de fabrication d'une plaque de base pour un composant en polymère optique avec couplage fibre/puce intégré en technique de moulage, la plaque de base ayant une ouverture en forme de sillon pour recevoir un guide d'ondes optique ainsi qu'un sillon de positionnement à section en V pour recevoir une fibre de guide de lumière à coupler au guide d'ondes optique, et ayant les étapes de procédé suivantes :

- fabrication d'une structure maître sur un substrat en silicium par

  - gravure anisotrope d'une structure de sillon ayant une zone avec une section en forme de V,
  - remplissage de la structure de sillon à gravure anisotrope avec un polymère pour donner une surface supérieure plane (13),
  - réalisation d'une ouverture (15) en forme de sillon dans le substrat en silicium et le polymère, la face frontale de l'ouverture (15) en forme de sillon se situant au-dessus de la zone à section en forme de V de la structure en sillon réalisée par gravure et les axes longitudinaux de la structure en sillon et de l'ouverture en forme de sillon (15) étant sensiblement parallèles,
  - enlèvement du polymère de la zone de la section en forme de V de la structure de sillon de préférence par ablation au laser pour obtenir un sillon de positionnement (11) en forme de V avec une surface frontale verticale (16) qui forme une structure communiquant avec l'ouverture en forme de sillon,

- réalisation d'un négatif (17) par moulage galvanique de la structure maître,
- réalisation de structures filles formant la plaque de base (18, 35, 40) à partir du négatif (17) dans un polymère plastique.

3. Procédé selon l'une des revendications précédentes,
caractérisé en ce que
les structures filles (18, 35, 40) sont fabriquées par injection et/ou par matriçage, par injection à la presse, coulée, procédé de coulée sous vide.

4. Procédé selon l'une quelconque des revendications précédentes,
caractérisé en ce que
pour un grand nombre de couplages fibre/puce prévus sur un composant en polymère optique, on réalise en même temps la structure maître et à partir delà les structures filles identiques.

5. Procédé selon l'une quelconque des revendications 1 à 7,
caractérisé en ce qu'
avec la structure maître pour le couplage chip/fibre, on réalise en même temps une structure maître pour une plaque de recouvrement reliée à l'élément de base.

6. Procédé selon l'une quelconque des revendications précédentes,
caractérisé en ce qu'
on grave à distance des structures (11) en forme de V, parallèles, par paire, et l'écartement parallèle de l'arête de fermeture intérieure définit l'écartement entre la plaque de base et la plaque de couverture.

7. Procédé selon l'une des revendications précédentes,
caractérisé en ce qu'
on grave des rainures de guidage (33) dans la plaque de couverture, ces rainures étant réalisées pour recevoir de manière ajustée les fibres de verre à recouvrir et ajuster celles-ci.

8. Procédé selon l'une quelconque des revendications précédentes,
caractérisé en ce qu'
au moulage des composants en polymère, on utilise un second négatif qui a une structure en forme de V, venant prendre de manière inversée entre des structures en forme de V, parallèles par paire et réalisant un ajustage fin micromécanique des deux négatifs.

9. Procédé selon l'une quelconque des revendications précédentes,
caractérisé en ce que
dans les composants en polymère moulés, les extrémités (24) des fibres de verre sont placées dans les sillons de positionnement, on remplit les ouvertures en forme de sillons avec un polymère conduisant la lumière et on rabat la plaque de couverture sur la plaque de base.

10. Procédé selon la revendication 9,
caractérisé en ce qu'
on réalise la liaison entre la plaque de base et la plaque de couverture par un prépolymère qui déborde et qui polymérise par voie thermique ou optique.

11. Procédé selon l'une quelconque des revendications précédentes,
caractérisé en ce que
l'on réalise séparément la plaque de base et la plaque de couverture et on ajuste pendant le montage.

12. Procédé selon l'une quelconque des revendications 9 à 11,
caractérisé en ce que
dans les ouvertures en forme de sillons, on introduit un polymère optique non linéaire NLO et entre la plaque de base (40) et la plaque de couverture (41), on place une feuille de polymère (42) portant des chemins conducteurs (46) et les électrodes (45).

13. Procédé selon la revendication 12,
caractérisé en ce que
la feuille de polymère est laminée sur la plaque de couverture avant le montage de celle-ci sur la plaque de base.

14. Procédé selon la revendication 12 ou 13,
caractérisé en ce que
les polymères à introduire ont des effets électro-optiques, acousto-optiques, magnéto-optiques ou thermo-optiques et aussi une fluorescence optique et une émission stimulée (amplification optique).

15. Procédé selon l'une quelconque des revendications 12 à 14,
caractérisé en ce qu'
un polymère électro-optique introduit encore à l'état liquide, directement après son introduction et le montage de la plaque de couverture, est polarisé par l'application d'un champ électrique à l'aide des électrodes appliquées sur la feuille de polymère pour terminer la polymérisation seulement à l'état polarisé.

16. Procédé selon l'une quelconque des revendications précédentes,
caractérisé en ce que
l'on combine des polymères passifs et des polymères actifs optiques dans un composant optique en polymère.

17. Composant optique pour le couplage intégré fibre/puce comprenant une plaque de base (18, 35, 40) qui comporte des sillons de positionnement (11) à section en forme de V avec une surface frontale perpendiculaire, pour recevoir une fibre optique (18),
caractérisé en ce qu'
il est prévu en outre une ouverture (15) en forme de sillon dans laquelle est réalisé un guide d'ondes optique (25) et

- les sillons de positionnement (11) et les guides d'ondes optiques (25) forment une structure réunie et la plaque de base est en un polymère et
- la plaque de base est obtenue par un double moulage d'une structure maître sur un matériau semi-conducteur mono-cristallin, la première étape de moulage se faisant de manière galvanique et la seconde étape de moulage par matriçage ou injection.

Fig. 1

Fig. 2

Fig. 3

Fig. 4

Fig. 5

Fig. 6

Fig. 7

EP 0 635 139 B1

Fig. 8